(19)

Europäisches
Patentamt
European
Patent Office
Office européen
des brevets

(11) **EP 3 081 429 A1**

(12) **EUROPEAN PATENT APPLICATION**

(43) Date of publication:
**19.10.2016 Bulletin 2016/42**

(21) Application number: **16164066.9**

(22) Date of filing: **06.04.2016**

(51) Int Cl.:
**B60L 11/18** *(2006.01)* **B60L 15/00** *(2006.01)*
**B60L 15/02** *(2006.01)* **B60L 15/08** *(2006.01)*
**B60L 15/20** *(2006.01)* **H02P 21/00** *(2016.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.04.2015 GB 201505857**

(71) Applicant: **Nissan Motor Manufacturing (UK) Ltd.
Cranfield
Bedfordshire MK43 0DB (GB)**

(72) Inventors:
• **URQUHART, Iain
Bedfordshire MK43 0DB (GB)**
• **GREENOUGH, Jim
Bedfordshire MK43 0DB (GB)**
• **ZHU, Zi-Qiang
Sheffield S1 3JD (GB)**

(54) **CONTROL METHOD FOR INTEGRATED ELECTRIC DRIVE AND CHARGER APPARATUS FOR A GRID ENABLED VEHICLE**

(57)     A method of controlling an electrical system for a grid-enabled vehicle, the system comprising: a bi-directional DC energy source; an electric machine including a rotor, a stator, a first winding and a second winding, the first and second windings each being multiphase windings, wherein the stator carries the first winding; a rotor angle detection means; a first control circuit connected to the first winding and including an input configured to be coupled to the grid; and a second control circuit through which the second winding is connected to the bi-directional DC energy source; wherein the method comprises: coupling the first control circuit to the grid; using the rotor angle detection means to determine a rotor angle that represents the position of the rotor with respect to the stator; selecting one of a set of predetermined vector positions according to the rotor angle, each vector position representing the position of the rotor with respect to the first winding; operating the first control circuit so as to convert grid-supplied electrical energy into an alternating multiphase voltage waveform that is optimised according to the selected vector position, wherein the voltage waveform produces an oscillating magnetic field around the first winding; and charging the bi-directional DC energy source using an induced alternating voltage waveform in the second winding arising through magnetic coupling between the first and second windings.

FIGURE 10

## Description

## Field of the invention

The invention relates to a control method for electric apparatus that combines the functionality of an electric drive and a battery charger. Such a method and apparatus is suitable for use in electric vehicle applications.

## Background of the invention

Electrically driven passenger vehicles are gaining market share against conventional ICE-based passenger vehicles. However, there are several factors that limit the acceptance of electric vehicles by the public at large, for instance: the limited range of such vehicles and the range anxiety it induces in the consumer; consumer scepticism about the true environmental benefit of electric vehicles; availability of charging stations and speed of charging; and the high purchase-cost of such vehicles, to name a few examples.

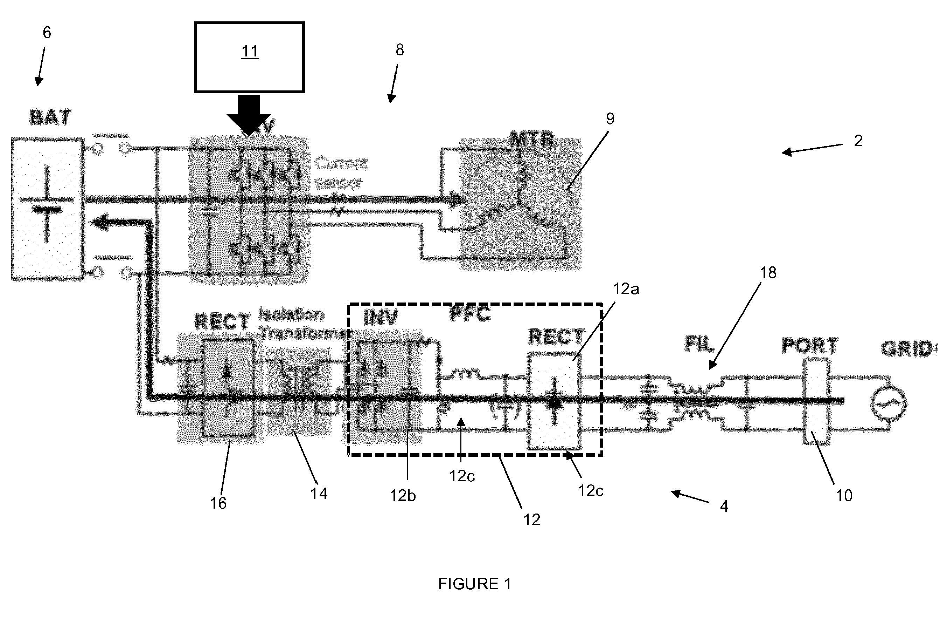

The high purchase-cost of electric vehicles is an important factor that limits large scale take-up and this cost is driven in large part by the complexity of the drive system. Consider a typical plug-in electric vehicle (PEV) or 'grid-enabled vehicle', as is shown schematically by way of example in Figure 1. As can be seen, the PEV shown here includes a traction drive system 2 and a separate charging system 4. It will be appreciated that other vehicle subsystems aren't shown here for brevity.

In overview, the traction drive system 2 includes a high power battery pack 6, an electronic drive module 8 in the form of a DC/AC inverter, and an AC electric motor 9 - typically AC driven motors are used in EV applications. The battery pack supplies DC power to the inverter 8 which switches the supplied power under the control of inverter control means 12 into a suitable 3-phase AC power supply for the motor 9.

The charging system 4 includes a grid power input port 10, a PFC (power factor correction) stage 12, a transformer 14 and a rectifier module 16. When in a charging mode, the grid input power port 10 receives AC input power from the electrical grid which is then routed through a suitable filter 18 to the PFC stage 12. As is known, the PFC stage 12 includes functionality to control the input power factor from the grid at unity and here includes an AC/DC rectifier 12a, a DC/AC inverter 12b and a PFC module 12c having a boost converter topology in series. The output of the PFC stage 12 feeds into the transformer 14 which supplies the rectifier module 16. The rectifier module 16 in turn converts the AC power input from the transformer 14 into a suitable voltage supply for the battery pack for the period of the charging cycle. Thus, the inverter 12b, which has an H-bridge topology, the transformer 14 and the rectifier 16 function as a DC-DC converter, whereby the inverter 12b is controlled by a battery controller (not shown) to generate a required charging voltage which is then switched across the transformer 14 and is then rectified back into DC by the rectifier 16.

The transformer 14 is an isolation transformer of a kind that will be familiar to the skilled reader, and is included to provide galvanic isolation (i.e. to eliminate direct electrical conduction paths) between the grid supply and any components that are connected to the vehicle chassis, such as the battery pack. This is a safety feature, to ensure that a user is not exposed to grid voltage in the case of a fault.

From the above brief overview of the typical components one might find in an electric vehicle, it is apparent that there are power electronic components that are common to the drive system 2 and the battery charging system 4. One approach taken to reduce the mass, complexity and cost of EV drive systems is to integrate the charging system and the electric motor to achieve a reduction in power electronic components, and various arrangements have been proposed for doing so.

One such arrangement has been proposed in WO 2013/182211 to Volvo, in which the electric motor is modified such that its stator carries two sets of windings where conventionally a single set of windings would be found.

In this arrangement, in charging mode a rotor carrying a set of permanent magnets is driven by a first set of windings that is connected to the grid. The movement of the rotor induces a current in the second set of windings, which is used to charge a vehicle battery.

The two sets of windings are electrically isolated from one another, thereby providing galvanic isolation between the grid supply and the battery, and so dispensing with the need for a separate isolation transformer. Furthermore, the respective drive circuits of each set of windings can be operated in reverse to provide the same functionality as the inverter and the rectifier of the charging system 4 of Figure 1, and so no additional components are required in this respect.

Although this arrangement provides a level of integration between the traction drive system and the charging system, as rotor movement is required to induce a current in the battery-side windings, undesirable noise and vibration are inevitably generated during charging.

A further problem arises in this charging arrangement, in that the varying magnetic flux across the windings generates eddy currents within the cores of the windings in accordance with Lenz's law. Those currents dissipate energy as heat, thereby wasting some of the energy supplied by the grid. These losses are commonly referred to in the field as 'iron losses', and are proportional to the square of the voltage applied to the windings. Clearly, such losses act to reduce the efficiency of energy transfer from the grid to the vehicle battery during charging.

It is against this background that the present invention has been devised.

Summary of the invention

According to a first aspect of the invention, there is provided a method of controlling an electrical system for a grid-enabled vehicle.

The system comprises a bi-directional DC energy source, and an electric machine including a rotor, a stator, a first winding and a second winding. The first and second windings are each multiphase windings, and the stator carries the first winding. The system further comprises a rotor angle detection means, a first control circuit connected to the first winding and including an input configured to be coupled to the grid, and a second control circuit through which the second winding is connected to the bi-directional DC energy source.

The method comprises coupling the first control circuit to the grid, using the rotor angle detection means to determine a rotor angle that represents the position of the rotor with respect to the stator, and selecting one of a set of predetermined vector positions according to the rotor angle. Each vector position represents the position of the rotor with respect to the first winding. The method further comprises operating the first control circuit so as to convert grid-supplied electrical energy into an alternating multiphase voltage waveform that is optimised according to the selected vector position. The voltage waveform produces an oscillating magnetic field around the first winding. Finally, the method comprises charging the bi-directional DC energy source using an induced alternating voltage waveform in the second winding arising through magnetic coupling between the first and second windings.

By controlling the first control circuit according to the selected vector position, a PWM carrier wave used to transmit the multiphase voltage waveform can be optimised so as to minimise iron losses in the system.

The set of vector positions may comprise six equi-spaced vector positions defined on a vector diagram that relates to one complete group of phases of the first winding. In a refinement that takes advantage of the fact that no torque needs to be exerted on the rotor, the set of vector positions may comprise twelve equi-spaced vector positions defined on the vector diagram. In either case, each of the vector positions defines the polarity of each phase of the first winding to define a phase configuration for each vector position, and wherein the phase configuration of each vector position is unique.

If there are six vector positions, optionally all of the phase configurations are three-phase. If there are twelve vector positions, the phase configurations may alternate between two-phase and three-phase around the vector diagram. Two phase positions inherently create no torque, and so are particularly suitable for use in charging.

Diametrically opposed vector positions may define reversed phase configurations, in which case the method may comprise alternating between the phase configurations of diametrically opposed vector positions to define the alternating voltage waveform. Such switching advantageously precludes generation of a continuous torque on the rotor. The phase configurations of neighbouring vector positions may have two identical phase polarities.

The alternating voltage waveform may have the form of an alternating square wave signal. In this case, the amplitude of the alternating voltage waveform may be proportional to an output voltage of the bi-directional energy source. In such embodiments, the duty cycle of the alternating waveform may be determined according to the power of transfer of electrical energy between the first and second windings, and the alternating waveform may have a frequency in the range of 5kHz to 15kHz.

The method may comprise selecting the vector position of the set that is closest to the rotor position, for example to minimise vibration. Alternatively, the method may comprise selecting a vector position that is orthogonal to the vector position of the set that is closest to the rotor position, for example to maximise inductance.

In some embodiments, the first control circuit is controlled according to a field-oriented current space vector method so as to create the alternating voltage waveform. In such embodiments, the method may comprise periodically switching a current vector in a d-q reference frame between diametrically opposed first and second vector points, the current vector being aligned with the selected vector position and disposed at an angle relative to the d-axis to define a d-axis component value and a q-axis component value, wherein the d-axis is aligned with the vector position of the set that is closest to the rotor position. A midpoint defined between the first and second vector points may coincide with the origin of the d-q reference frame. Such methods may comprise switching the current vector between the first and second vector points according to a square-wave profile.

The vector position is optionally selected to provide a desired balance between rotor vibration and inductance between the first and second windings.

The stator may carry the second winding, in which case the first and second windings may be paired to form dual-layer windings. This provides a compact, space-saving arrangement.

The second control circuit may be arranged to convert AC electrical signals supplied by the second winding into a DC input for the bi-directional DC energy source, thereby removing any requirement for external circuitry to perform such a conversion.

**Brief description of the drawings**

For a more detailed understanding of the invention, it will now be described by way of example with reference to the following drawings in which:

Figure 1 is a schematic view of a known vehicle system including a motor drive subsystem and a battery charging subsystem;

Figure 2 is a schematic view of a vehicle system that integrates motor drive and battery charging functions;

Figure 3 is a flow diagram illustrating a typical process for implementing field-oriented vector space control in an electric motor;

Figure 4 is a graphical representation of an implementation of a field-oriented vector space control method;

Figure 5 is a graphical representation of a variation of the control method of Figure 3;

Figure 6 is a graphical representation of an alternative implementation of a field-oriented vector space control method;

Figure 7 is a graphical representation of a further alternative implementation of a field-oriented vector space control method;

Figure 8 is a vector diagram showing the orientation of six vector positions used in a first control approach according to an embodiment of the invention;

Figure 9 is a graph showing a three-phase waveform used in the first control approach;

Figure 10 is a vector diagram showing the orientation of twelve vector positions used in a second control approach according to another embodiment of the invention;

Figure 11 is a graph showing a two-phase waveform used in the second control approach;

Figure 12a shows a partial section view of an electric motor in which a rotor occupies a first position;

Figure 12b is a vector diagram corresponding to Figure 12a showing the orientation of the rotor;

Figure 13a corresponds to Figure 12a but shows the rotor in a second position;

Figure 13b is a vector diagram corresponding to Figure 13a showing the orientation of the rotor; and

Figure 14 is a flow diagram showing a control process for charging an electric motor of the vehicle system of Figure 2.

## Detailed description of the embodiments

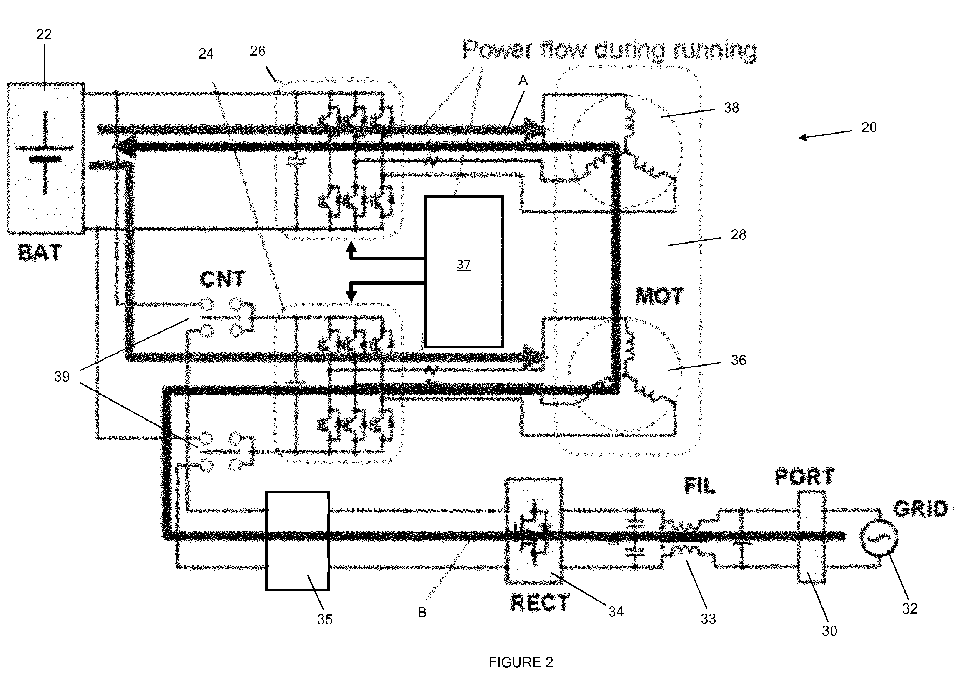

Figure 2 illustrates schematically an on-board electrical system 20 of a grid-enabled vehicle that integrates vehicle traction and also the functionality to charge the battery of the vehicle.

In overview, the electrical system 20 comprises a bi-directional DC power source or 'battery' 22, a first power electronics module 24, a second power electronics module 26, an electric machine 28, and an electric grid input port 30.

The grid input port 30 is connectable to a power supply plug of a suitable grid power source 32 which may be a single-phase AC voltage source or a three-phase AC voltage source. The port 30 provides the appropriate physical form factor for connecting to a plug provided at a charging point, and such an interface is known generally in the art.

The port 30 links to the first power electronics module 24 through a charge input filter 33, a rectifier 34, and a power factor correction (PFC) module 35. The charge input filter 33 comprises choke conductors to filter out line noise and interference from the electrical system 20 back into the grid during a charging period. The rectifier 34 comprises suitable electrical switches such as a full-wave bridge arrangement that rectifies the input AC grid power to provide a DC voltage to the first power electronics module 24. Also, as is known, the PFC module 35 functions to remove current harmonics from the DC voltage, thereby correcting the power factor, ideally so that PF=1. The skilled person would understand that various PFC topologies would be appropriate such a boost converter topology which is a well understood power factor correction topology for switched mode power supplies. It is envisaged that the PFC module 35 may be an interleaved boost converter topology which, as is known in the art, comprises two boost converters working in parallel and having a 180° phase delay and provides benefits in terms of DC voltage smoothing.

The electric machine 28 is shown schematically in Figure 2; its specific structural configuration is not important for the purposes of the present invention, and could take various forms. For now, however, it should be noted that the electric machine 28 includes a first stator field winding/coil 36 and a second stator field winding/coil 38 that are arranged in the stator so as to be magnetically coupled but galvanically isolated. By virtue of this arrangement the electrical system 20 may be run in two modes: a drive mode and a charging mode. In the arrangement shown in Figure 2, the first and second windings 36, 38 are arranged for a three-phase power input. Electrical contacts 39 are provided to switch power supply to the first power electronics module 24 between the battery 22, during a driving mode, and the rectifier 34 during the charging mode.

In the drive mode, as indicated by the arrows labelled 'A' in Figure 2, power is supplied from the battery 22 to the electric machine 28 through both the first power electronics module 24 and the second power electronics module 26 which energise the first and second field windings 36, 38 respectively. Here, therefore, it will be appreciated that both the first and second power electronic modules 24, 26 are driven as inverters to convert the DC power supplied from the battery 22 to AC power for the electric machine 28. The first and second field windings 36, 38 thus act together, in synchrony, to generate a synchronised rotating electromagnetic field. This rotating flux field couples to flux generated by permanent magnets disposed around a rotor of the electric machine 28, which effects movement of the rotor and so causes the electric machine 28 to act as a motor.

In the charge mode, as indicated by the arrow labelled 'B' in Figure 2, AC power supplied by the grid input port 30 is converted to DC by the rectifier 34 and then is converted back into AC by the first power electronic module 24, from where it is supplied to the first field winding 36. The magnetic coupling between the first field winding 36 and the second field winding 38 induces an alternating magnetic field in the second field winding 38 which delivers energy to the second power electronic module 26. The second power electronic module 26 is driven as an active rectifier so as to convert the AC power generated by the second field winding 38 to DC power for supply to the battery 22. In this mode of operation, therefore, the first field winding 36 and second field winding 38 act as a transformer.

It will be appreciated from the above explanation that each of the first and second power electronics modules 24, 26 is a three-phase active rectifier inverter that can be controlled to function either as an inverter, to convert DC power to AC power, or as an active rectifier to convert AC power to DC power. As shown in Figure 2, each of the power electronic modules 24, 26 is controlled by a common power controller 37. Expressed another way, the first and second electronic modules 24,26 function as a dual-active bridge DC-DC converter in which the first and second field windings 36,38 of the electric machine 28 serve as the transformer of the device.

Each power electronics module 24, 26 has the same circuit configuration and includes a three-phase bridge set comprising six high speed power switches such as IGBTs, although it should be noted that other switching means such as MOSFETs may be used. Low pass filters are included on the DC side of the power electronics modules 24, 26 in order to remove residual AC components on the converted DC voltage line. Such a configuration would be familiar to the skilled person.

As shown schematically in Figure 2, the electric machine 28 includes first and second stator field coils or 'windings' 36, 38. From the above explanation, it will be appreciated that in the charging mode of operation, the first field winding 36 and the second field winding 38 must be coupled electromagnetically in order to enable the energisation of the first field winding 36 to induce a charging waveform in the second field winding 38. The means by which the electromagnetic coupling between the first and second field windings 36, 38 operates is not central to the invention, and so is not described here in detail.

In principle, electromagnetic coupling between the first and second field windings 36, 38 will occur provided that they are situated in sufficiently close proximity to one another, whilst being electrically isolated from one another. This could entail a side-by-side arrangement, for example, or the windings 36, 38 could be wound one on top of the other in concentric relation, provided that in either case the windings 36, 38 are separated by insulating material or by an air gap.

Regardless of the particular winding topology adopted, control of the above described apparatus during charge mode poses a challenge. As noted above, prior art arrangements rely on rotation of the rotor to effect charging. However, the above described apparatus makes use of magnetic coupling between the first and second field windings 36, 38 to achieve charging. Therefore, there is no need for the rotor to move during charging, and indeed it is desirable to prevent rotor movement to avoid the associated noise and vibration. However, it will be appreciated that, under normal circumstances, an input waveform to the first field winding 36 will tend to cause movement of the rotor.

In view of this, embodiments of the invention implement a field-oriented current space vector method to control the electric machine 28 during charging in a manner that avoids rotor movement. While field-oriented current space vector control methods will be familiar to the skilled reader, an overview of the underlying principles is provided here in order to place the invention into context.

It should first be noted that individual magnetic fields generated by each of the permanent magnets carried on the rotor define respective rotor flux vectors each lying at an angle relative to an arbitrary fixed point on the stator, referred to hereafter as the rotor flux angles. The rotor flux vectors rotate with the rotor, resulting in varying rotor flux angles.

Turning now to the stator, the first and second field windings 36, 38 are each installed on the stator so as to form respective sets of individual coils, each coil being arranged to emulate the magnetic behaviour of a permanent magnet when an electric current is applied. When a three-phase alternating current is applied to the first and second field windings 36, 38, the individual coils of each winding 36, 38 can be considered to be divided into groups of three neighbouring coils, one from each phase, and with each group having the same three-phase electric current profile as the other groups at any given time.

The differing currents flowing through each coil in a group generate three corresponding magnetic fields, which combine to produce an overall flux field. The effect of the combined flux can be represented by resolving the currents to determine a current vector.

The flux associated with each current vector couples to the nearest rotor flux vector to produce a force which exerts a torque on the rotor. The torque is maximised when the current vector lies at 90° to the rotor flux to which it couples, whereas no torque is produced if the current vector is aligned with the rotor flux. Therefore, the torque applied to the rotor can be adjusted by controlling the current in the first and second field windings 36, 38 so as to provide a desired angle between the current vector and the rotor flux. Typically, a motor will be controlled to produce a maximum torque output.

Although the current vector is defined by three physical currents, it will be appreciated that a vector can be resolved into orthogonal components. Therefore, to reduce the number of control variables, a first step in field-oriented current space vector control is to convert the current vector into two components, effectively transforming the physical three-phase current into an equivalent two-phase current. This step is typically performed using a 'Forward Clark Transformation', and the two phases are represented by an 'α-component' and a 'β-component'.

As noted above, the rotor flux varies with rotation of the rotor. As the rotor flux angle changes, so too does the strength of coupling between the rotor flux and the flux produced around the field windings 36, 38 as represented by the α- and β-component values. Noting that the rotor carries permanent magnets, while the magnetic field produced by the field windings 36, 38 can be controlled, it makes sense to use the rotor as a reference frame for measuring the strength of coupling. From the perspective of a fixed point on the rotor, the rotor flux is constant while the current vector appears to vary. This can be modelled as varying of the α- and β-component values with respect to the rotor flux. For a constant rotor speed, the component values vary sinusoidally.

As the objective in this type of motor control is ultimately to control the force exerted on the rotor, which is a function of the current vector with respect to the rotor, an additional transformation is applied to map the two-phase α and β component values to a coordinate system that uses the rotor as a reference frame.

It is noted that there is typically a desire for constant torque on the rotor to avoid torque ripple, which entails a substantially constant current vector using the rotor as a reference frame. In this situation, the second transformation yields a pair of DC current values. This is advantageous in conventional motor control, as two constant values can be controlled more easily than three alternating current values.

In any event, referencing the control to the rotor de-sensitises the control to the frequency of the alternating current; if the physical three-phase current were to be controlled directly, increasing current frequency would dictate increasingly powerful, and therefore costly, control components. Implementing field-oriented current space vector control enables accurate control with relatively basic components.

The transformation that is applied is known as a 'Forward Park Transformation', or 'dqo transformation' and the result is a vector associated with a reference frame that rotates with the rotor flux, the vector being defined by two orthogonal components: a d-axis (direct) component (or 'd-axis current'), which is aligned with the rotor and so governs flux linkage; and a torque-forming q-axis (quadrature) component (or 'q-axis current').

It is noted that some variations of the Park Transformation enable direct conversion of the original current values into d-axis current and q-axis current components.

In operation, feedback loop control is applied to the d-axis current and the q-axis current in order to produce a three-phase waveform in the first and second field windings 36, 38 that will exert a desired torque on the rotor. To do this, an instantaneous three-phase current flowing through the windings 36, 38 is measured and converted into effective d-axis current and q-axis current values. These values are compared against desired values to derive an error signal, which is amplified to produce a control signal which is then returned to the original three-phase format using reverse transformations. The input voltages are then adjusted accordingly by the control signal, to alter the three-phase current in the first and second field windings 36, 38, thereby controlling the torque applied to the rotor. This technique is commonly referred to as 'd-q control', 'vector control' or 'field oriented control'.

It is noted that the control adjusts the input voltage frequency in proportion with the desired rotational speed of the rotor. By way of example, an electric machine including eight pole pairs operating at 10000rpm will typically apply an input voltage frequency of around 670Hz. The input voltage is typically implemented using a pulse-width modulated (PWM) carrier signal with a frequency significantly higher than the control frequency, for example 10kHz or higher.

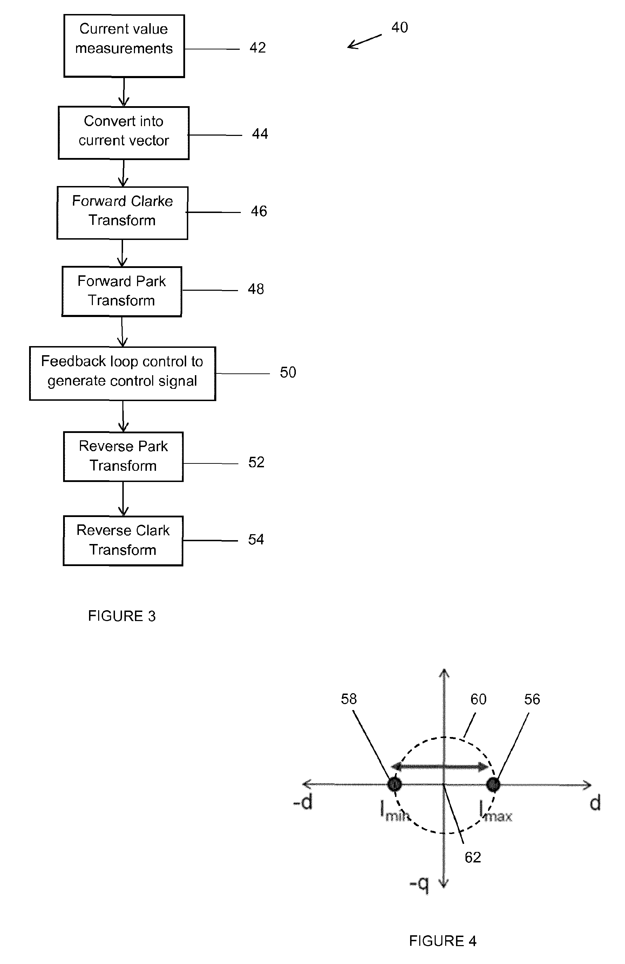

The steps involved in the control method described above are illustrated in Figure 3 by way of a flow diagram. As shown, a typical control process 40 involves first obtaining at step 42 instantaneous current values, which for a three-phase system comprises three separate values, and also positional information regarding the angular position of the rotor which may be derived from a suitable rotor position sensor. Next, the three current values are converted at step 44 into a current vector as described above. This current vector is then resolved into orthogonal components (α, β components) using a Forward Clarke Transformation at step 46. A Forward Park Transformation is then applied at step 48 to convert the α and β component values into a d-component and a q-component associated with a reference frame that rotates with the rotor.

Feedback loop control is then applied at step 50 to the d and q component values to derive a control signal composed of a d-axis current control value and a q-axis current control value. The control signal is then converted back into equivalent α and β component values using a Reverse Park Transformation at step 52, and then into a current vector defining three control voltages using a Reverse Clarke Transformation at step 54, which is then used to control the input signal.

The above process 40 is iterated to provide continuous control. The frequency at which the process 40 iterates is typically at least 10 times the frequency of the carrier signal. Therefore, for a carrier signal frequency of 10kHz, the control process would iterate at 100KHz or above. Modern controllers may be able to run the process at much higher frequencies, for example 1GHz or higher, which is desirable as increasing frequency tends to improve the resolution of the control.

In conventional d-q motor control, it is usually desirable to maximise the torque that is applied to the rotor. This entails producing a current vector that is orthogonal to the rotor flux. As noted above, it is also generally desirable to produce a current vector that is constant from the rotor's perspective to avoid unwanted torque ripple. To achieve these objectives, in d-q control the torque-forming q-axis current is typically controlled at a constant value, while the d- axis current is typically set to zero.

However, an opportunity has been identified to make use of the d-q control technique to avoid undesired movement of the rotor of the above described integrated charger motor arrangement while in charging mode.

D-q control is implemented in the first power electronics module 24 as it creates the input waveform for the first field winding 36. In contrast with the conventional approach, in embodiments of the present invention the d-q control is tailored to prevent rotation of the rotor. Two different basic approaches have been identified for achieving this, realised in two main embodiments of the invention. Both embodiments reverse the conventional approach of providing a constant current vector with respect to the rotor for steady rotation, and instead vary the d-axis current and q-axis current components in a manner that minimises rotor torque output, thereby preventing significant movement of the rotor.

In a first embodiment, the torque forming q-axis current is set to zero, thereby ensuring that no torque is produced in the electric machine 28. A graphical representation of this approach is provided in Figure 4. To ensure that the magnetic field in the stator does not rotate and cause torque ripple, which may occur, for example, if the rotor is not aligned with the windings, the d-axis current is switched between an $I_{max}$ value 56 and an $I_{min}$ value 58, for example using a square wave profile.

Calculation of the $I_{max}$ and $I_{min}$ values 56, 58 is dictated by the voltage that is supplied to the vehicle battery, and the desired power. Using this information, the required current is determined from the well-known equation: power = voltage x current.

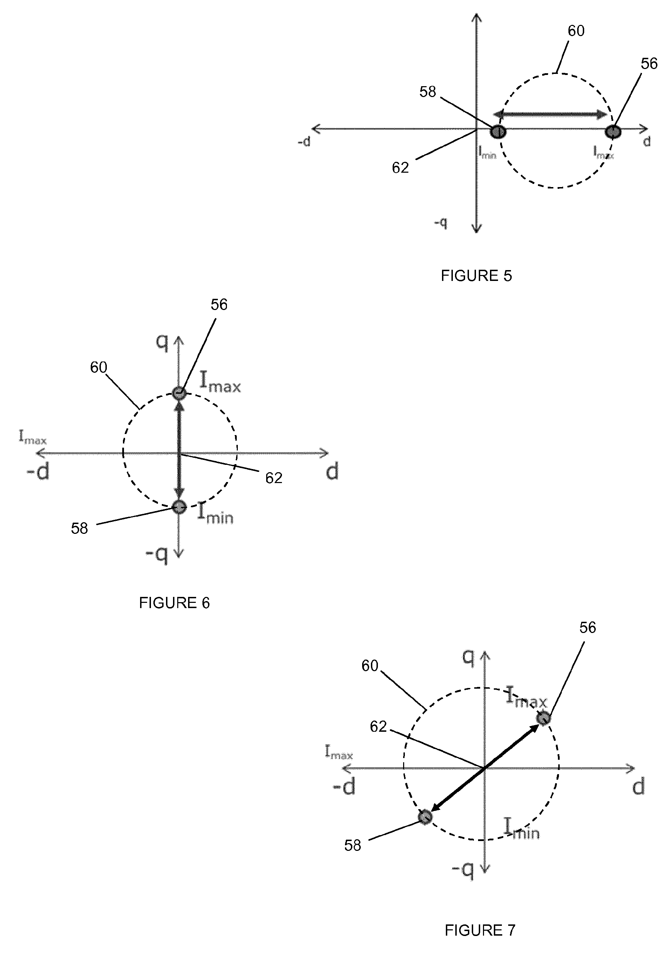

As shown in Figure 5, the centre point about which the d-axis current is varied may be offset from zero to a constant, positive value. This approach may help avoid de-magnetisation of the rotor magnets, particularly if the control is configured such that the d-axis current remains positive at all times as it switches between the $I_{max}$ and $I_{min}$ values 56, 58.

In the second embodiment, which is illustrated in Figure 6, the $I_{max}$ and $I_{min}$ values 56, 58 are selected such that the d-axis current is set to zero, and the q-axis current is switched according to a square wave profile, centred on zero. As in the first embodiment, varying the q-axis current prevents a rotating magnetic field from forming. As q-axis current causes torque, high frequency oscillation is required in this embodiment to prevent vibration of the rotor. Higher frequency tends to increase losses, including iron loss in the electric machine 28 and switching losses in the first power electronic module 24. Therefore, the frequency is optimised so as to strike a balance between losses and preventing vibration. A frequency of between 5kHz and 15kHz has been found to work well in one specific implementation, although this will vary depending on the physical characteristics of the components of the system.

A benefit with this second approach is that, due to the way electric machines of this type are typically designed, using q-axis current results in higher inductance between the first and second field windings 36, 38 relative to when the q-axis current is held at zero. This ensures improved efficiency of energy transfer between the first and second windings 36, 38. However, due to the fact that q-axis current creates torque on the rotor, this benefit may be offset to some extent by introduction of high-frequency vibration of the rotor.

In either of the above embodiments, the induced waveform in the second field winding 38 is substantially identical in form to the input waveform in the first field winding 36, albeit with reduced amplitude. Consequently, the induced waveform also does not act to move the rotor.

A major advantage of both of the above embodiments is that, as d-q control is a standard technique, the method can be implemented using standard components. Indeed, when the electric machine 28 operates in drive mode it is likely that d-q control will be implemented in the first power electronics module 24 in a conventional manner. Therefore, no additional components are required to implement this method, thereby minimising the cost and complexity of the system.

In order to strike a balance between inductance and vibration, a third embodiment of the invention is envisaged in which the two embodiments described above are combined. In this embodiment, the $I_{max}$ value 56 is selected such that both the d-axis current and the q-axis current are positive and non-zero, and the $I_{min}$ value 58 defines negative, non-zero d-axis current and q-axis current components. This approach is depicted in Figure 7. In the pictured example, the current space vector is oriented at approximately 45° to the d-axis, although this angle can be varied according to the vibration and inductance requirements. For example, the angle can be altered by tuning the d-axis current and q-axis current components so as to define new $I_{max}$ and $I_{min}$ values 56, 58.

While the embodiments of the invention shown in Figures 4 to 7 are presented as alternative approaches, they can be reconciled by considering each of them as fundamentally involving switching the current between two diametrically opposed vector points on a circle 60 drawn on the d-q reference coordinate system. In this way, a common inventive thread running through all of the embodiments of the invention can be seen.

The circle 60 may be centred on the origin 62, as in Figures 4 and 6, or the circle 60 may be offset from the origin 62, as in Figure 5. It is noted that the centre of the circle corresponds to a midpoint between the vector points defined by $I_{max}$ and $I_{min}$. Equally, while the above approaches describe particular blends of d-axis current and q-axis current, the blend can be continuously varied by altering the angle of the current vector relative to the d-axis. This can be represented as varying the angle relative to the d-axis of a theoretical line drawn between the two diametrically opposed current values on the circle.

For example, the approach shown in Figure 6 involving q-axis current only can be represented as setting the current vector angle to 90°, with the circle 60 centred at the origin 62. Based on this, all possible variations can be represented using three variables: the angle of the current vector; the location of the centre of the circle 60; and the diameter of the circle 60, which defines the magnitude of the current vector. These three variables in turn define the magnitudes of the d-axis current and the q-axis current in any scenario.

In view of this, it should be appreciated that each of Figures 4 to 7 illustrates a special case of the proposed d-q control implementation, whereas in reality the control method enables usage of any two diametrically opposed switching points defined by the $I_{max}$ and $I_{min}$ values 56, 58, such that the magnitude and angle of the current vector are continuously variable within the bounds of the circle 60. Therefore, the exact positions of the switching points can be optimised to account for the varying physical characteristics of each electric machine, along with desired charging behaviour.

While the embodiments of the invention have been described with reference to the electric machine topology of Figures 1 and 2, this is for representative purposes only; it should be appreciated that the above described control method is not limited to use with the apparatus referred to, but could be applied to a wide range of integrated charging motor arrangements.

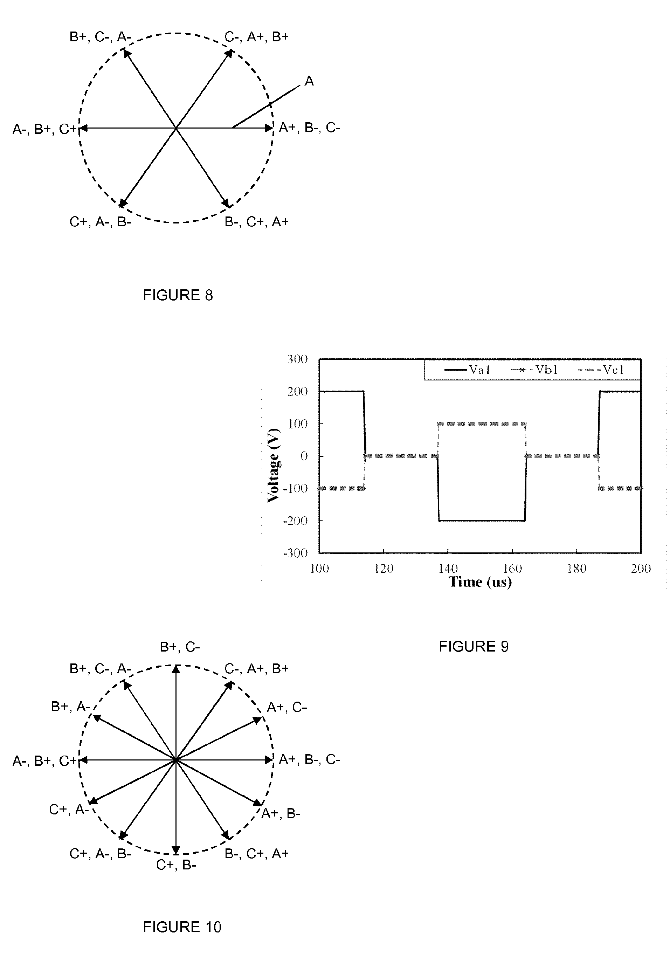

As noted above, the input voltage is typically implemented using a PWM carrier signal, as would be the case when operating in drive mode. When operating in drive mode, the PWM signal can conveniently be tailored to the position of the rotor by approximating the rotor position to one of six defined vector positions. The vector positions are equi-spaced around a vector diagram as shown in Figure 8, with each vector position having an associated phase configuration that defines the polarity of each of the phases of the field windings.

The vector positions represent six distinct positions that the rotor can take with respect to the first field winding. Each vector position corresponds to the rotor being aligned with one of the three phases of the first field winding; there are six positions as the rotor has a north and a south pole, and so there are two possible rotor orientations for each phase, with the reversed polarity of the rotor magnets in those two positions entailing reversed phase polarities in the two corresponding vector positions.

This approach therefore takes into account the positions of the rotor magnets relative to the phases of the first field winding, and therefore the relative influence that each individual phase has on the rotor magnets throughout movement of the rotor. For example, to maximise the torque that is applied to the rotor, it is desirable to weight the flux produced in the first field winding towards whichever phase the rotor magnets are furthest away from; in contrast, activating a phase that is aligned with the rotor does not produce any torque on the rotor. In drive mode, the PWM carrier signal can be continuously adjusted as the rotor moves to ensure that the generated torque is maintained at an optimum level. It has been found that using the vector positions to optimise the PWM signal in this way reduces iron losses by up to 50% compared with a more traditional rotating field approach. This is in part due to the fact that iron losses are proportional to the square of the applied voltage, and so any reduction in voltage entails a magnified reduction in iron losses.

The phase configurations of the six vector positions cover all possible polarity combinations for the three-phase first field winding, as illustrated in the vector diagram of Figure 8. Each of the six vector positions relates to one of these phase combinations, such that the most appropriate combination can be selected according to the position of the rotor, and in particular the rotor magnets, with respect to the windings. Moving from one vector position to the next around the circle, it is noted that the polarity of only one of the phases changes each time. Therefore, the phase configurations of neighbouring vector positions have two identical phases. Moreover, the phases reverse in sequence around the vector diagram such that, moving clockwise, and starting at vector position 'A', if phase A reverses between a first pair of vector positions, phase B will reverse between the next pair, and then phase C in the subsequent pair. This is indicative of the fact that the physical effect of the changing phases from one position to the next is determined so as to position the magnetic flux ahead of the rotor as it rotates.

Figure 8 details phase configurations for each vector position, namely the polarity assigned to each of the phases of the first field winding for each vector position. For example, if the rotor is generally aligned with vector position A that is shown as horizontal and directed to the right in Figure 8, phase A is positive, while phases B and C are negative. Noting that the three phases need to sum to zero, the implication of this is that, in the simplest implementation, phases B and C each have a negative voltage that is half of the positive voltage that is applied to phase A.

Applying this vector position based approach to the earlier method for charging the vehicle battery using field vector control, the d-q reference frame is oriented such that the d-axis is aligned with the vector position that is closest to the physical rotor position. This is consistent with the conventional approach in which the d-axis is aligned with the rotor position itself. Combining d-q control with the defined vector positions entails that the $I_{max}$ and $I_{min}$ values 56, 58 defining diametrically opposed vector points on the vector diagram coincide with a pair of opposed vector positions.

It is recalled that the d-axis current controls the magnetic coupling between the rotor and the stator, and lies in alignment with the rotor, while the q-axis current represents the torque forming component and is disposed orthogonally to the rotor. In the vector position based approach, the d-axis is therefore aligned with the vector position that is closest to the rotor position. Therefore, if the rotor is aligned with vector position A and the q-axis current is set to zero, the $I_{max}$ value coincides with vector position A. Accordingly, the $I_{min}$ value corresponds to the diametrically opposed vector position, namely the horizontal, leftward pointing vector, in which the phase polarities are reversed compared with the rightward vector. Therefore, the phase configuration alternates between A+, B-, C-, and A-, B+, C+.

A waveform to be applied to the first field winding is configured so as to reflect the phase configurations of the opposing and alternating vector positions. This creates a multiphase, alternating square wave, as described more below. This alternation provides the varying flux that is required to induce a current in the second field winding with which to charge the vehicle battery.

Each pair of opposing vector positions is assigned complementary and opposite phase configurations. Therefore, switching between opposed vector positions always entails reversing the polarities of the phases, and so cannot result in the creation of a rotating field. Instead, the resulting waveform creates an oscillating magnetic field. In this way, the control method avoids exerting a continuous torque on the rotor that would cause it to rotate during charging. As in the more general control method described above, the frequency of the switching is chosen so as to be high enough to avoid significant vibration of the rotor in response to the oscillation of the magnetic field.

As Figure 8 is a vector diagram, the vector positions are shown according to their effective electrical angle; the circle does not equate to the physical motor arrangement. To translate the vector angles onto a mechanical reference frame, it should be noted that in this case a 30° electrical angle equates to a 7.5° mechanical angle. Therefore, the circle shown in Figure 8 represents one quadrant of the mechanical arrangement.

Figure 9 shows graphically a representative waveform that would be applied to the first field winding based on this approach, including typical values for the wavelength of the waveform and the amplitudes of each phase in the waveform. It should be appreciated that the frequency, amplitudes and wavelength of the waveform will deviate according to the requirements of each specific implementation.

In the specific example shown in Figure 9, phase A switches between 200V and -200V, while phases B and C are operated in parallel to switch between 100V and -100V. There is therefore zero net voltage across the three phases at all times. This waveform is an implementation of a 300V supply, in that 200V is applied to phase A, while the remaining 100V is applied to phases B and C in parallel.

It is noted that the waveform of Figure 9 that is used in charging mode is not a PWM signal as in drive mode; instead the waveform takes the form of an alternating square wave with a predetermined duty cycle.

The supply voltage is dictated by the battery demand, which is in turn a function of the state of charge (SoC) and the state of health (SoH) of the battery. When the SoC is very low, the battery output voltage is also low, typically around 260V. As the battery SoC rises, the output voltage increases up to a maximum of typically around 400V when the SoC is 100%. The input waveform typically needs to be matched to the battery output at any given time, and so a battery controller is used to monitor the instantaneous SoC and SoH values and to use them together with the rotor position to determine target d-axis current and q-axis current values so as to deliver a waveform with appropriate amplitudes. In the simplest implementation, the supply voltage is substantially equal to the battery output voltage, and this value is divided between the three phases as outlined above to define the respective amplitudes of each phase.

The duty cycle of the alternating square wave signal, namely the proportion of the wavelength over which the voltage is non-zero, is approximately 50% in the waveform shown in Figure 9. The duty cycle has an impact on electrical losses during transfer of energy between the first and second windings, and is adjusted according to the charging power. At lower power levels, for example below 10kW, the duty cycle is lowered so as to increase the current in the first field winding. Although this increases the losses arising from the electrical resistance of the windings, also known as the 'copper loss', this is acceptable these losses are offset by the reduced iron losses resulting from the lower duty cycle. Correspondingly, at higher power levels, for example above 20kW, the duty cycle may be increased to raise the iron losses, but in turn lower copper losses to an even greater extent, thereby providing a net efficiency benefit. The duty cycle is typically varied between around 45% and 55% to account for this.

It is noted that the above concerns in terms of iron losses and copper losses are significant in this integrated charging arrangement as the motor is being used as a transformer; a conventional isolation transformer comprises a low loss, soft magnetic composite (SMC) core together with tightly wound Litz wire, and is inherently far more efficient. However, SMC cores and Litz wire are not well suited for use in motors, and so alternative strategies must be implemented in order to maximise efficiency.

The six vector positions shown in Figure 8 are defined in response to a requirement to create a rotating magnetic field so as to drive the rotor, and this is only possible with a three-phase waveform; as the skilled reader will appreciate, a two-phase signal does not produce a rotating field, and so would be of no use in drive mode.

However, for charging mode where no torque is required, a further refinement to the vector position based approach is possible, noting that a two-phase signal is sufficient for charging as it still provides the varying flux required to induce a current in the second field winding. There are six polarity combinations for a two-phase signal, leading to six additional vector positions. Each two-phase vector position is interposed between a respective pair of the original three-phase vector positions, giving twelve positions in total. As shown in Figure 10, which is a vector diagram similar to Figure 8 but showing the twelve vector positions including the intermediate two-phase positions, the twelve vector positions are equispaced.

In terms of the physical apparatus, each new intermediate vector position corresponds to the rotor being centred between two phases of the first field winding. As there are three phases and two possible rotor orientations, there are six intermediate rotor positions.

The phase configuration for each two-phase vector position is defined by the two phases that are identical in each of the three-phase vector positions between which the two-phase vector position is defined. Accordingly, the phase that reverses between those three-phase vector positions is the phase that is deactivated for the intermediate two-phase vector position. This also means that the active phases in the two-phase vector position have opposite polarities, which ensures that the phases sum to zero.

Adding the new vector positions provides enhanced resolution in the vector position approximation, ensuring that the rotor is as closely aligned as possible with the nearest vector position. An added benefit with the configuration shown in Figure 10 is that there is always a vector position disposed orthogonally to the vector position that is aligned with the rotor; this means that the d-axis current can be set to zero to use q-axis current only as desired, which is not possible if only six vector positions are used.

As noted above, setting the d-axis current to zero optimises inductance between the first and second field windings. It is therefore a considerable advantage to be able to use q-axis current-only control in combination with the vector position based control, as each improves the efficiency of charging. It has been found that the twelve position vector approach can provide a 66% reduction in iron losses compared with a more traditional rotating field approach.

As in the earlier described charging method, a blend of d-axis and q-axis currents can be used so as to balance the relative benefits of each. In the vector position based approach, this entails selecting one of the vector positions other than those that are aligned with or orthogonal to the rotor position.

However the rotor is positioned, a vector position is selected so as to balance all of the above considerations, namely: iron loss; copper loss; two-phase or three-phase activation; and the required power and voltage. In many circumstances, using q-axis current only provides the optimum solution with minimised losses, even if this means using a three-phase waveform instead of a two-phase waveform.

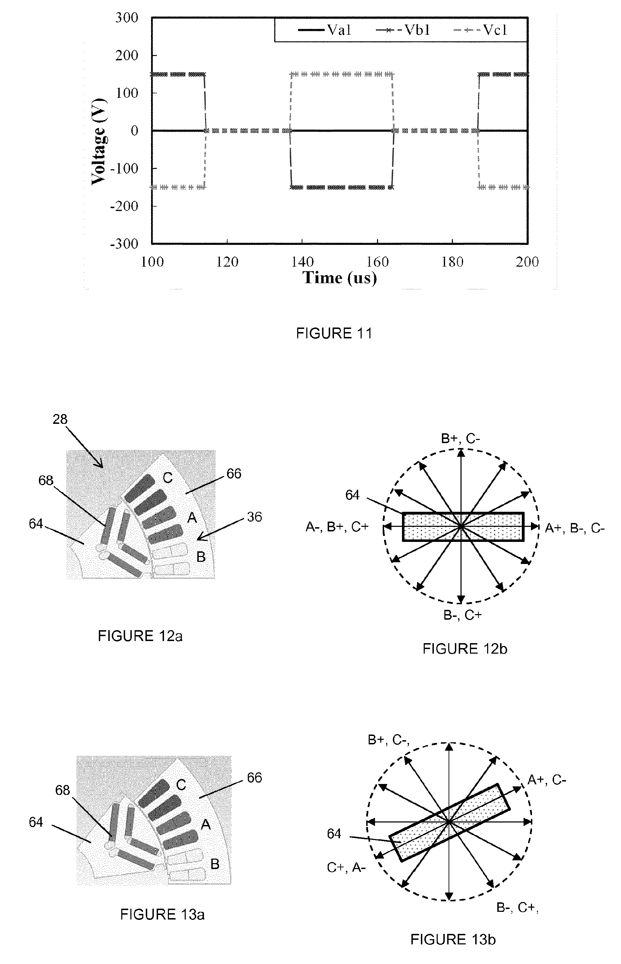

Figure 11 graphically illustrates a typical two-phase waveform that may be applied to the first field winding if one of the two-phase vector positions is selected. In the example shown, phases B and C are activated so as to alternate between 150V and -150V, while phase A is deactivated. This again corresponds to a supply voltage of 300V, which is split evenly between phases B and C so that, as before, the net voltage is zero at all times.

This example can illustrate how the two-phase approach yields a further reduction in the iron loss. As noted earlier, the iron loss is proportional to the square of the voltage, and so approximates to the square of the voltage multiplied by a constant, K. So, in this two-phase example, the iron loss will be:

$$K(2(150^2)) = 45000K.$$

In contrast, in the three phase example the total iron loss will be:

$$K((200^2)+2(100^2)) = 60000K.$$

The waveform of Figure 11 is otherwise similar to that shown in Figure 9, and in particular has approximately the same frequency and duty cycle. This is because the same considerations apply in a two-phase mode in terms of avoiding losses and vibration of the rotor.

The waveforms shown in Figures 9 and 11 cover only a very short time period, and so do not reflect the variation of the signal over time. The frequency is held constant, but the amplitude and duty cycle vary according to the instantaneous requirements of the battery. This is accommodated by setting appropriate target values for the d-axis current and the q-axis current according to the rotor position, which is fixed during charging. Using the d-q control method allows for optimisation of the waveform to maximise charging efficiency, and makes use of standard control techniques. Therefore, the above described control method can be implemented using conventional control hardware with minimal modification beyond updating the control program.

As the motor is operated using d-q control in drive mode, all of the necessary control components are already present to enable the above implementation of the charging method. Therefore, creating the required waveform for the first field winding in charging mode through manipulation of the target d-axis and q-axis current values represents a convenient implementation that makes use of the available hardware.

However, a simpler implementation of the vector based charging approach is also possible, in which an artificial square wave corresponding to those shown in Figures 9 and 11 is generated by a dedicated controller or signal generator and fed to the first field winding. The square wave would still need to be tailored to the rotor position, but this can be provided for by determining the square wave that is required for each vector position in advance. The amplitude and duty cycle would also require adjustment in response to battery demand and the charging power. As the general form of the square wave is known, these adjustments are relatively straightforward, and so, in practice, the appropriate waveform could be generated using a simple formula or a look up table in response to feedback from the battery controller.

This latter approach bypasses d-q control altogether, whilst providing substantially the same output, and so may reduce the processing power required compared with using a d-q control approach to generate the required waveform. However, as an additional dedicated controller would be required to implement the latter charging approach, it would not make sense to implement this approach in arrangements in which a d-q controller is already present for drive purposes. Furthermore, the ability of a dedicated controller to adjust an artificial square wave in response to changing vehicle system demands, and in particular its ability to respond to unexpected variations, is likely to be lower than that of the relatively powerful d-q controller that is designed to provide dynamic control in response to feedback from the motor.

To aid understanding of how the vector position relates to the physical configuration of the rotor and the first field winding 36, Figures 12a, 12b, 13a and 13b provide illustrations of the physical position of the rotor with respect to the first field winding 36. Figures 12a and 13a each show an angular portion of the motor 28, in which the rotor 64 is shown in the lower left corner of the picture, and the stator 66 is positioned to the right. The rotor magnets 68 are arranged in two parallel pairs that are inclined towards the centre of the rotor 64. The three phases of the first field winding 36 are held on the stator 66 and are labelled as phases 'A', 'B' and 'C' respectively.

Figures 12b and 13b are vector diagrams equivalent to Figure 10, in which the vector positions corresponding to the physical rotor position in Figures 12a and 13a respectively are shown, with the other vector positions hidden.

Figures 12a and 12b show the rotor 64 positioned centrally across phase A, in a symmetrical arrangement. As shown in the vector diagram, this orientation corresponds to the rotor 64 aligning with the horizontal vector positions. This means that for d-axis current only, a three phase waveform is implemented that alternates between B+, C-, A- and B-, C+, A+. This manner of activation creates a symmetrical flux profile across the three phases, and as the rotor magnets 68 are aligned with the centre of the three phases, the symmetrical flux induces no torque on the rotor 64, as it is being pulled and repelled equally in both senses at any given moment.

For q-axis current only, the orthogonal vector position is chosen, such that the waveform alternates between B-, C+ and B+, C-, with phase A deactivated. Although this means that a torque is created each time the phases are activated, the high frequency of the oscillation ensures that this torque does not translate into rotor vibration. Moreover, as the rotor magnets 68 are centred between phases B and C, the magnitude of the torque exerted on the rotor 64 is equal in both states, albeit directed in opposite senses. As phase A is deactivated, the net torque averaged over time is balanced at zero.

In Figure 13a the rotor 64 has shifted by 7.5° such that the rotor magnets 68 straddle phases A and C. As noted above, a 7.5° change in physical orientation equates to a 30° change in electrical angle, and so the rotor 64 is now aligned with the next of the 12 vector positions. In this position, for d-axis current only, the first field winding 36 alternates between A+, C- and A-, C+, with phase B deactivated. Therefore, as for the two-phase option in Figure 12a, the net torque over time is zero, while the frequency is set sufficiently high that the instantaneous torque created in either state does not cause vibration of the rotor 64. It is noted that activating phase B would have no effect on the rotor 64 in the position shown in Figure 13a, bearing in mind that phase B of the next winding, although not shown in the figure, would be adjacent to phase C, and so the rotor magnets 68 sit centrally within a pair of phase B coils.

For q-axis current only, as before the orthogonal vector position is selected, in this case entailing alternating the waveform between B+, C-, A- and B-, C+, A+. As phases C and A have the same polarity in each state, and as phase B has no effect on the rotor 64 in the illustrated position, in this scenario no torque is created in either state.

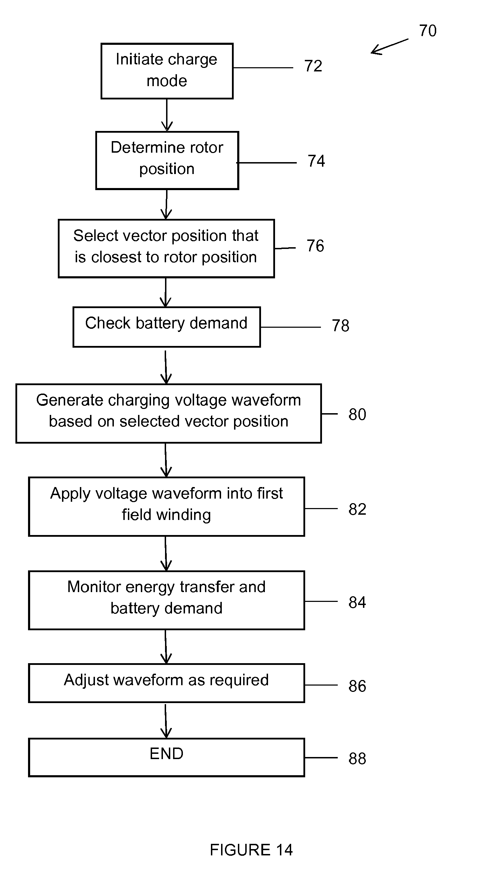

Figure 14 is a flow diagram illustrating a simplified process 70 representing an implementation of the above described method for charging the vehicle battery. The process 70 begins at step 72 by initiating charge mode in the vehicle. This may occur manually, for example when a user presses a button next to the grid input, or charge mode may be triggered automatically when a power supply is attached to the grid input. Once charge mode has initiated, the rotor position is determined at step 74 using standard sensors present in the vehicle.

The rotor position is then approximated to one of the vector positions being used, which may be one of the six three phase vector positions, or alternatively one of the twelve vector positions including the intermediate two phase positions. The nearest vector position to the physical rotor position is then selected at step 76 to be used as the basis for the subsequent generation of charging signals. Next, the battery demand is read at step 78 from the battery controller. This step may include reading d-axis and q-axis target values from the battery controller if d-q control is to be used in controlling the charging signal. A charging waveform is then generated at step 80 in accordance with the selected vector position and the battery demand, and the waveform is applied at step 82 to the first field winding to effect charging.

Once charging commences, over time the battery demand and the rate of energy transfer may vary, and so these variables are monitored at step 84 of the process 70. The waveform is continually adjusted at step 86 to account for changes in battery demand and charging power, until the battery SoC reaches a predetermined threshold, at which point charging completes and the process ends at step 88. Typically, charging completes once the SoC reaches approximately 80%.

It will be appreciated by a person skilled in the art that the invention could be modified to take many alternative forms to that described herein, without departing from the scope of the appended claims.

**Claims**

1. A method of controlling an electrical system for a grid-enabled vehicle, the system comprising:

   a bi-directional DC energy source (22);
   an electric machine (28) including a rotor, a stator, a first winding (36) and a second winding (38), the first and second windings each being multiphase windings, wherein the stator carries the first winding;
   a rotor angle detection means;
   a first control circuit connected to the first winding and including an input configured to be coupled to the grid; and
   a second control circuit through which the second winding is connected to the bi-directional DC energy source;

   **characterised in that** the method comprises:

   coupling the first control circuit to the grid;
   using the rotor angle detection means to determine a rotor angle that represents the position of the rotor with respect to the stator;
   selecting one of a set of predetermined vector positions according to the rotor angle, each vector position representing the position of the rotor with respect to the first winding;
operating the first control circuit so as to convert grid-supplied electrical energy into an alternating multiphase voltage waveform that is optimised according to the selected vector position, wherein the voltage waveform produces an oscillating magnetic field around the first winding; and
charging the bi-directional DC energy source (22) using an induced alternating voltage waveform in the second winding arising through magnetic coupling between the first and second windings.

2. The method of claim 1, wherein the set of vector positions comprises six equi-spaced vector positions defined on a vector diagram that relates to one complete group of phases of the first winding (36).

3. The method of claim 2, wherein the set of vector positions comprises twelve equi-spaced vector positions defined on the vector diagram.

4. The method of claim 2 or claim 3, wherein each of the vector positions defines the polarity of each phase of the first winding to define a phase configuration for each vector position, and wherein the phase configuration of each vector position is unique.

5. The method of claim 4 when dependent on claim 2, wherein all of the phase configurations are three-phase.

6. The method of claim 4 when dependent on claim 3, wherein the phase configurations alternate between two-phase and three-phase around the vector diagram.

7. The method of any of claims 4 to 6, wherein diametrically opposed vector positions define reversed phase configurations.

8. The method of claim 7, comprising alternating between the phase configurations of diametrically opposed vector positions to define the alternating voltage waveform.

9. The method of any of claims 4 to 8, wherein the phase configurations of neighbouring vector positions have two identical phase polarities.

10. The method of any preceding claim, wherein the alternating voltage waveform has the form of an alternating square wave signal.

11. The method of claim 10, wherein the amplitude of the alternating voltage waveform is proportional to an output voltage of the bi-directional energy source.

**12.** The method of claim 10 or claim 11, wherein the duty cycle of the alternating waveform is determined according to the power of transfer of electrical energy between the first and second windings.

**13.** The method of any of claims 10 to 12, wherein the alternating waveform has a frequency in the range of 5kHz to 15kHz.

**14.** The method of any preceding claim, comprising selecting the vector position of the set that is closest to the rotor position.

**15.** The method of any of claims 1 to 13, comprising selecting a vector position that is orthogonal to the vector position of the set that is closest to the rotor position.

**16.** The method of any preceding claim, wherein the first control circuit is controlled according to a field-oriented current space vector method so as to create the alternating voltage waveform.

**17.** The method of claim 16, comprising periodically switching a current vector in a d-q reference frame between diametrically opposed first and second vector points, the current vector being aligned with the selected vector position and disposed at an angle relative to the d-axis to define a d-axis component value and a q-axis component value, wherein the d-axis is aligned with the vector position of the set that is closest to the rotor position.

**18.** The method of claim 17, wherein a midpoint defined between the first and second vector points coincides with the origin of the d-q reference frame.

**19.** The method of claim 17 or claim 18, comprising switching the current vector between the first and second vector points according to a square-wave profile.

**20.** The method of any preceding claim, wherein the vector position is selected to provide a desired balance between rotor vibration and inductance between the first and second windings.

**21.** The method of any preceding claim, wherein the stator carries the second winding.

**22.** The method of claim 21, wherein the first and second windings are paired to form dual-layer windings.

**23.** The method of any preceding claim, wherein the second control circuit is arranged to convert AC electrical signals supplied by the second winding into a DC input for the bi-directional DC energy source.

FIGURE 1

FIGURE 2

```
┌─────────────────┐
│  Current value  │
│  measurements   │──── 42
└─────────────────┘
        │
        ▼
┌─────────────────┐
│  Convert into   │
│ current vector  │──── 44
└─────────────────┘
        │
        ▼
┌─────────────────┐
│ Forward Clarke  │
│    Transform    │──── 46
└─────────────────┘
        │
        ▼
┌─────────────────┐
│  Forward Park   │
│    Transform    │──── 48
└─────────────────┘
        │
        ▼
┌─────────────────────┐
│ Feedback loop control to │
│ generate control signal  │──── 50
└─────────────────────┘
        │
        ▼
┌─────────────────┐
│  Reverse Park   │
│    Transform    │──── 52
└─────────────────┘
        │
        ▼
┌─────────────────┐
│  Reverse Clark  │
│    Transform    │──── 54
└─────────────────┘
```

40

FIGURE 3

FIGURE 4

16

FIGURE 5

FIGURE 6

FIGURE 7

FIGURE 8

FIGURE 9

FIGURE 10

FIGURE 11

FIGURE 12a

FIGURE 12b

FIGURE 13a

FIGURE 13b

```
                  ┌─────────────────┐
                  │  Initiate charge │————— 72
                  │      mode        │
                  └────────┬────────┘
                           │                        ↙———— 70
                           ▼
                  ┌─────────────────┐
                  │  Determine rotor │————— 74
                  │     position     │
                  └────────┬────────┘
                           │
                           ▼
              ┌──────────────────────────┐
              │ Select vector position that│——— 76
              │  is closest to rotor position│
              └────────────┬─────────────┘
                           │
                           ▼
              ┌──────────────────────────┐
              │   Check battery demand    │——— 78
              └────────────┬─────────────┘
                           │
                           ▼
          ┌──────────────────────────────────┐
          │ Generate charging voltage waveform │——— 80
          │  based on selected vector position │
          └────────────────┬─────────────────┘
                           │
                           ▼
          ┌──────────────────────────────────┐
          │ Apply voltage waveform into first  │——— 82
          │          field winding             │
          └────────────────┬─────────────────┘
                           │
                           ▼
          ┌──────────────────────────────────┐
          │    Monitor energy transfer and     │——— 84
          │        battery demand              │
          └────────────────┬─────────────────┘
                           │
                           ▼
          ┌──────────────────────────────────┐
          │    Adjust waveform as required     │——— 86
          └────────────────┬─────────────────┘
                           │
                           ▼
          ┌──────────────────────────────────┐
          │              END                   │——— 88
          └──────────────────────────────────┘
```

FIGURE 14

Europäisches
Patentamt

European
Patent Office

Office européen
des brevets

# EUROPEAN SEARCH REPORT

Application Number

EP 16 16 4066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 006 257 A1 (NISSAN MOTOR MFG UK LTD [GB]) 13 April 2016 (2016-04-13) <br><br> * the whole document * <br> ----- | 1,2,4,5, 7-10, 13-23 | INV. <br> B60L11/18 <br> B60L15/00 <br> B60L15/02 <br> B60L15/08 |
| T | TEXAS INSTRUMENT EUROPE: "Field Orientated Control of 3-Phase AC-Motors", TECHNICAL LITERATURE TEXAS INSTRUMENTS EUROPE, XX, XX, 1 February 1998 (1998-02-01), XP002240388, * page 9 - page 12 * <br> ----- | 1-19 | B60L15/20 <br> H02P21/00 |
| X | EP 2 541 755 A1 (SIEMENS AG [DE]) 2 January 2013 (2013-01-02) * abstract * * figure 1 * * paragraphs [0005] - [0026] * * claims 1-8 * <br> ----- | 1-19, 21-23 | |
| A | DE 10 2012 203525 A1 (BAYERISCHE MOTOREN WERKE AG [DE]) 12 September 2013 (2013-09-12) * abstract * * figures 1-6 * * paragraphs [0001] - [0006], [0013] - [0014], [0049] - [0061] * <br> ----- | 1-23 | **TECHNICAL FIELDS SEARCHED (IPC)** <br><br> B60L <br> H02P |
| A | JP 2013 132197 A (NISSAN MOTOR) 4 July 2013 (2013-07-04) * the whole document * <br> ----- | 1-23 | |
| A | US 2014/239869 A1 (GORKA MATTHIAS [DE] ET AL) 28 August 2014 (2014-08-28) * abstract * * figure 1 * * paragraphs [0038] - [0045] * <br> ----- | 1-23 | |

The present search report has been drawn up for all claims

| Place of search | Date of completion of the search | Examiner |
|---|---|---|
| The Hague | 12 September 2016 | Schmitt, Gilles |

## ANNEX TO THE EUROPEAN SEARCH REPORT
## ON EUROPEAN PATENT APPLICATION NO.

EP 16 16 4066

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2016

| Patent document cited in search report | | Publication date | Patent family member(s) | | Publication date |
|---|---|---|---|---|---|
| EP 3006257 | A1 | 13-04-2016 | EP 3006257 A1 | | 13-04-2016 |
| | | | GB 2531249 A | | 20-04-2016 |
| EP 2541755 | A1 | 02-01-2013 | NONE | | |
| DE 102012203525 | A1 | 12-09-2013 | CN 104203640 A | | 10-12-2014 |
| | | | DE 102012203525 A1 | | 12-09-2013 |
| | | | EP 2822806 A2 | | 14-01-2015 |
| | | | US 2015061567 A1 | | 05-03-2015 |
| | | | WO 2013131738 A2 | | 12-09-2013 |
| JP 2013132197 | A | 04-07-2013 | JP 2013132197 A | | 04-07-2013 |
| | | | WO 2013077221 A1 | | 30-05-2013 |
| US 2014239869 | A1 | 28-08-2014 | CN 103906650 A | | 02-07-2014 |
| | | | DE 102011085731 A1 | | 08-05-2013 |
| | | | US 2014239869 A1 | | 28-08-2014 |
| | | | WO 2013064486 A2 | | 10-05-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013182211 A